# FASCICULE DE BREVET EUROPEEN

(11) **EP 3 303 244 B1**
(45) Date de publication et mention de la délivrance du brevet: **14.12.2022**
(21) Numéro de dépôt: 16739202.6
(22) Date de dépôt: 06.06.2016
(51) Int. Cl.: C03C 25/28, C08K 3/00, C08K 3/22, C08K 3/32, C08K 5/5313, C08L 33/12

(54) **PROCEDE D'IMPREGNATION D'UN SUBSTRAT FIBREUX AVEC UN MELANGE (METH) ACRYLIQUE COMPRENANT UNE SUBSTANCE IGNIFUGEANTE**
VERFAHREN ZUM IMPRÄGNIEREN EINES FASERSUBSTRATS MIT EINER METHACRYLMISCHUNG MIT EINER FLAMMHEMMENDEN SUBSTANZ
METHOD FOR IMPREGNATING A FIBROUS SUBSTRATE WITH A METHACRYLIC MIXTURE COMPRISING A FLAME-RETARDANT SUBSTANCE

(30) Priorité: 05.06.2015 FR 1555172
(43) Date de publication de la demande: 11.04.2018
(73) Titulaire: Arkema France, 92705 Colombes (FR)
(72) Inventeur: GERARD, Pierre, 64230 Denguin (FR)
(74) Mandataire: Arkema Patent
(86) Numéro de dépôt international: PCT/FR2016/051344
(87) Numéro de publication internationale: WO 2016/193645

(56) Documents cités:
- WO-A1-00/24832
- WO-A1-2006/061079
- WO-A1-2014/140465
- DD-A7- 299 479

## Description

L'invention concerne un procédé d'imprégnation d'un substrat fibreux, un mélange à caractère ignifuge à base de polymère (méth)acrylique pour l'imprégnation d'un substrat fibreux, et le substrat fibreux imprégné obtenu par la mise en œuvre du procédé d'imprégnation.

Un tel procédé permet notamment de fabriquer des pièces tridimensionnelles, par exemple des pièces ou des ensembles de pièces mécaniques, présentant une grande résistance au feu. Lors d'un incendie par exemple, le mélange ignifuge favorise la carbonisation des pièces, retarde l'inflammation, et minimise la dégradation. De telles pièces ou ensembles de pièces sont utilisés dans des domaines variés tels que l'aéronautique, l'automobile, le transport ferroviaire, ou encore la construction.

### [Art antérieur]

Certaines pièces ou certains ensembles de pièces tels que ceux précédemment cités sont parfois amenés à subir des contraintes mécaniques ou efforts mécaniques élevés. De telles pièces sont dès lors très largement fabriquées à partir de matériaux composites.

Un matériau composite est un assemblage d'au moins deux composants non miscibles. Un effet de synergie est obtenu par un tel assemblage, de sorte que le matériau composite obtenu possède des propriétés notamment mécaniques et/ou thermiques que chacun des composants initiaux ne possède pas ou possède mais à un degré inférieur par rapport au matériau composite.

De plus, un matériau composite est constitué par au moins un matériau de renfort conférant audit matériau composite de bonnes propriétés mécaniques, notamment une bonne tenue aux efforts mécaniques subis par le matériau composite, et par un matériau de matrice formant une phase continue et assurant la cohésion dudit matériau composite. Parmi les différents types de composites utilisés dans l'industrie, les composites à matrices organiques sont les plus représentés. Dans le cas des composites à matrices organiques, le matériau de matrice est généralement un polymère. Ce polymère peut être soit un polymère thermodurcissable, soit un polymère thermoplastique.

La préparation du matériau composite s'effectue par un mélange du matériau de matrice et du matériau de renfort, ou par mouillage ou imprégnation du matériau de renfort par le matériau de matrice, puis par polymérisation du système obtenu. Dans le cas du mélange de la matrice et du renfort, ledit renfort peut être constitué de charges renforçantes telles que du gravier, du sable, ou des billes de verre. Dans le cas du mouillage ou de l'imprégnation du renfort par la matrice, ledit renfort peut être constitué de fibres de dimensions variables.

La matrice polymère peut comprendre des charges afin de conférer des propriétés spécifiques au matériau composite final. De telles propriétés peuvent être la résistance aux Ultra-Violets (UV), la résistance au feu, ou encore la résistance aux chocs. Cependant, il est bien connu de l' homme du métier que l'adjonction de charges au sein de la matrice polymère a tendance à faire augmenter sa viscosité, rendant l'imprégnation du renfort par ladite matrice polymère très difficile, voire impossible dans certains cas.

Le document FR 3 002 943 propose une solution au problème de la forte augmentation de viscosité lors de l'adjonction de charges ignifugeantes. Ce document décrit un sirop (méth)acrylique liquide d'imprégnation d'un substrat fibreux constitué de fibres longues. Le sirop (méth)acrylique liquide comprend un polymère (méth)acrylique, un monomère (méth)acrylique, et une substance ignifugeante. La composition du sirop et la teneur en substance ignifugeante inférieure à 50% en poids par rapport au poids total de sirop (méth)acrylique permet d'obtenir un sirop (méth)acrylique dont la viscosité est inférieure à 10 000 mPa.s.

Le document DD 299 479 décrit un procédé de préparation d'un tissue ignifugé par revêtement et/ou imprégnation du tissue avec une liant ignifugeant. Le liant est un mélange de latex (type dienique et/ou acrylique) dans laquelle et ajouter sous agitation une retardateur des flammes sous forme solide ou liquide.

Cependant, il est souvent intéressant d'avoir une alternative lors de l' imprégnation du substrat fibreux concernant la matrice polymère imprégnant ledit substrat fibreux, notamment lorsqu'une machine d'injection n'est pas adaptée à l'injection d'une telle matrice polymère à base d'un sirop liquide, ou que la granulométrie des charges ignifugeantes nécessaire pour obtenir une imprégnation optimale du substrat fibreux doit atteindre des gammes de valeurs particulièrement basses.

### [Problème technique]

L'invention a donc pour but de remédier aux inconvénients de l'art antérieur en proposant un procédé d'imprégnation d'un substrat fibreux avec un mélange comprenant un polymère thermoplastique (méth)acrylique, ledit mélange ayant un caractère ignifuge et une viscosité suffisamment faible pour permettre une imprégnation optimale du substrat fibreux sans porosité et de manière homogène.

L'invention vise également à proposer un mélange (méth)acrylique dont la taille des particules est très faible (faible granulométrie), permettant ainsi une imprégnation optimale du substrat fibreux.

Un autre objectif de l'invention est de proposer une pièce en matériau composite dont la matrice polymère comprend une substance ignifuge adhérant parfaitement à ladite pièce en matériau composite.

L'invention vise en outre à proposer des pièces en matériau composite obtenues par le procédé d'imprégnation possédant de bonnes propriétés mécaniques.

### [Brève description de l'invention]

L'invention se rapporte à un procédé d'imprégnation d'un substrat fibreux selon la revendication 1.

A cet effet, l'invention a pour objet un mélange (méth)acrylique pour ledit procédé d'imprégnation d'un substrat fibreux, principalement caractérisé en ce qu'il comprend :
a) une première dispersion comprenant au moins un polymère (méth)acrylique obtenu par polymérisation en émulsion d'un ou plusieurs monomères (méth)acryliques,
b) une deuxième dispersion comprenant au moins une substance ignifugeante, la substance ignifugeante se présente sous forme de particules dont le diamètre moyen D₅₀ est compris entre 0,5 et 10 µm.

Selon d'autres caractéristiques optionnelles du mélange (méth)acrylique :
- le polymère (méth)acrylique de la première dispersion est choisi parmi les polyméthacrylates d'alkyle ou les polyacrylates d'alkyle ;
- les monomères (méth)acryliques de la première dispersion sont choisis parmi l'acide acrylique, l'acide méthacrylique, les monomères acryliques d'alkyle, les monomères méthacryliques d'alkyle et leurs mélanges ;
- les monomères (méth)acryliques de la première dispersion sont choisis parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges ;
- la substance ignifugeante de la deuxième dispersion est choisie parmi :
   - Des additifs dérivés phosphorés tels que des phosphinates, des diphosphinates, des phosphonates, des phosphates, du phosphore rouge, des polyphosphates d'ammonium, ou leurs mélanges,
   - Des charges minérales hydratées telles que des hydroxydes métalliques.
- Les additifs dérivés phosphorés sont choisis parmi les phosphinates ou diphosphinates présentant les formules (I) ou (II) suivantes : 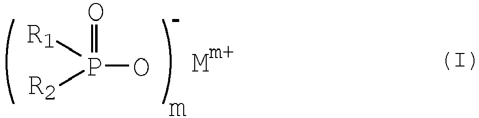 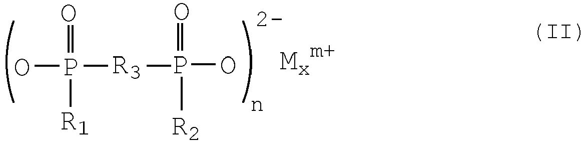 dans lesquelles :
   - R₁ et R₂ désignent des groupements alkyle en C₁-C₆, linéaires ou ramifiés et/ou aryle ;
   - R₃ désigne un groupement alkylène en C₁-C₁₀, linéaire ou ramifié, arylène en C₆-C₁₀, alkylarylène ou arylalkylène ;
   - M désigne Mg, Ca, Al, Sb, Sn, Ge, Ti, Zn, Fe, Zr, Ce, Bi, Sr, Mn, Li, Na, K ;
   - m est un nombre entier entre 1 et 4 ;
   - n est un nombre entier entre 1 et 4 ;
   - x est un nombre entier entre 1 et 4.
- Les additifs dérivés phosphorés ont l'une des formules (III) ou (IV) suivantes : 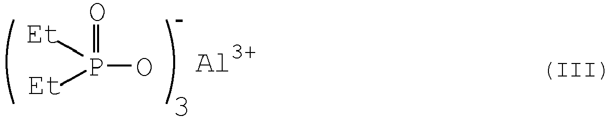 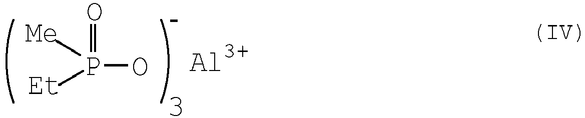
- La deuxième dispersion comprend entre 30% en poids et 70% en poids, de préférence entre 40% en poids et 60% en poids de substance ignifugeante.

L'invention se rapporte à un procédé d'imprégnation d'un substrat fibreux, principalement caractérisé en ce qu'il comprend une étape d'imprégnation du substrat fibreux avec un mélange (méth)acrylique, ledit mélange (méth)acrylique comprenant :
a) une première dispersion comprenant au moins un polymère (méth)acrylique obtenu par polymérisation en émulsion d'un ou plusieurs monomères (méth)acryliques,
b) une deuxième dispersion comprenant au moins une substance ignifugeante.
le procédé d'imprégnation comprend une étape de fabrication du mélange (méth)acrylique par mélange d'une première dispersion comprenant au moins un polymère (méth)acrylique obtenu par polymérisation en émulsion d'un ou plusieurs monomères (méth)acryliques, et d'une deuxième dispersion comprenant au moins une substance ignifugeante

Avantageusement, l'étape d'imprégnation dudit substrat fibreux est réalisée dans un bain d'imprégnation.

Selon d'autres caractéristiques optionnelles du procédé d'imprégnation :
- le substrat fibreux comprend des fibres de verre.

L'invention se rapporte en outre à un procédé de fabrication de pièces mécaniques ou d'éléments structurés ou d'articles, principalement caractérisé en ce qu'il comprend les étapes suivantes :
a) imprégnation d'un substrat fibreux, conformément au procédé d'imprégnation décrit ci-dessus, avec un mélange (méth)acrylique obtenu par mélange d'une première dispersion comprenant au moins un polymère (méth)acrylique obtenu par polymérisation en émulsion d'un ou plusieurs monomères (méth)acryliques, et d'une deuxième dispersion comprenant au moins une substance ignifugeante,
b) séchage du substrat fibreux imprégné par le mélange (méth)acrylique,
c) consolidation du substrat fibreux imprégné obtenu après l'étape de séchage.

Selon d'autres caractéristiques optionnelles du procédé de fabrication :
- l'étape de séchage est réalisée à une température comprise entre 20°C et 200°C, de préférence entre 50°C et 180°C, et de manière davantage préférée entre 80°C et 150°C ;
- l'étape de consolidation est réalisée à une température comprise entre 100°C et 350°C, de préférence entre 150°C et 300°C, et de manière davantage préférée entre 180°C et 250°C, la température pouvant être constante ou variable pendant toute ou partie de l'étape de consolidation ;
- toute ou partie de l'étape de consolidation est réalisée avec une pression comprise entre 1 bar et 150 bars, de préférence entre 3 bars et 100 bars, et de manière davantage préférée entre 5 et 50 bars, la pression pouvant être constante ou variable pendant toute ou partie de l'étape de consolidation ;
- après l'étape de séchage, le substrat fibreux imprégné comprend entre 5% en poids et 30% en poids, de préférence entre 5% et 20% en poids, et de manière davantage préférée entre 5% et 15% en poids de matrice polymère par rapport au poids total de substrat fibreux imprégné ;
- après l'étape de séchage, le substrat fibreux imprégné comprend entre 5% en poids et 30% en poids, de préférence entre 15% en poids et 25% en poids de substance ignifugeante par rapport au poids total de substrat fibreux imprégné.

L'invention se rapporte en outre à une pièce mécanique ou un élément structuré ou un article en matériau composite, obtenu par la mise en œuvre du procédé de fabrication. La pièce mécanique est notamment une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

### [Description détaillée de l'invention]

On définit une « émulsion » comme étant un mélange liquide/liquide d'une phase discontinue liquide dans une phase continue liquide et plus particulièrement une dispersion d'une substance huileuse sous forme de petites gouttelettes dans une substance aqueuse, ladite dispersion étant stabilisée par un ou plusieurs composés chimiques tels que des tensioactifs ou dispersants.

On définit une « dispersion » comme étant un système colloïdal présentant une phase liquide continue et une deuxième phase discontinue qui est distribuée dans toute la phase continue.

On entend par « monomère (méth)acrylique », tout type de monomère acrylique et méthacrylique.

On entend par « polymère (méth)acrylique », un polymère comprenant essentiellement des monomères (méth)acryliques qui représentent au moins 50% en poids ou plus du polymère (méth)acrylique.

Le terme « substance ignifugeante » tel qu'utilisé se rapporte à une substance, additif ou charge, apte à retarder l'inflammation d'un matériau afin d'améliorer sa tenue au feu.

L'invention concerne un procédé d'imprégnation d'un substrat fibreux avec un mélange (méth)acrylique pour l'imprégnation de ladite substrat fibreux, caractérisé en ce qu'il comprend :
a) une première dispersion comprenant au moins un polymère (méth)acrylique obtenu à partir d'un ou plusieurs monomères (méth)acryliques,
b) une deuxième dispersion comprenant au moins une substance ignifugeante.

Les deux dispersions sont avantageusement des dispersions aqueuses.

Le mélange (méth)acrylique est issu du mélange de la première dispersion et de la deuxième dispersion. Le mélange d'une dispersion (méth)acrylique et d'une dispersion à substance ignifugeante permet d'obtenir une imprégnation optimale du substrat fibreux, la matrice polymère entourant chaque fibre du substrat fibreux, et un positionnement de la substance ignifugeante à la surface dudit substrat fibreux. De plus, la substance ignifugeante adhère parfaitement au substrat fibreux.

### La première dispersion

Cette première dispersion est avantageusement une dispersion aqueuse.

### • Le polymère (méth)acrylique

Le polymère (méth)acrylique peut être choisi parmi les polyméthacrylates d'alkyle ou les polyacrylates d'alkyle. Selon un mode de réalisation préféré de l'invention, le polymère (méth)acrylique est le polyméthacrylate de méthyle (PMMA). Il doit être dès lors entendu que polyméthacrylate de méthyle (PMMA) peut désigner un homopolymère de méthacrylate de méthyle (MMA) ou un copolymère de MMA ou leurs mélanges.

En particulier, il peut s'agir d'un mélange d'au moins deux homopolymères de MMA ayant un poids moléculaire différent, ou d'un mélange d'au moins deux copolymères de MMA ayant une composition en monomères identique et un poids moléculaire différent, ou d'un mélange d'au moins deux copolymères de MMA ayant une composition en monomères différente. Il peut également s'agir d'un mélange d'au moins un homopolymère de MMA et d'au moins un copolymère de MMA.

En particulier, le polymère (méth)acrylique peut être fonctionnalisé, en ce qu'il peut comporter un ou plusieurs groupement fonctionnels réactifs destinés à réagir avec le substrat fibreux lors son imprégnation par le mélange (méth)acrylique.

De préférence, le polymère (méth)acrylique est obtenu par polymérisation en émulsion d'un ou plusieurs monomères (méth)acryliques. La polymérisation en émulsion permet un excellent contrôle de la réaction via la température de réaction. De plus, une telle polymérisation est généralement rapide et permet d'obtenir des taux de conversion élevés, et des polymères possédant de masses moléculaires élevées.

### • Les monomères (méth)acryliques

Les monomères (méth)acryliques permettant d'obtenir le polymère (méth)acrylique par polymérisation en émulsion sont choisis parmi l'acide acrylique, l'acide méthacrylique, les monomères acryliques d'alkyle, les monomères méthacryliques d'alkyle et leurs mélanges.

De préférence, les monomères (méth)acryliques sont choisis parmi l'acide acrylique, l'acide méthacrylique, les monomères acryliques d'alkyle, les monomères méthacryliques d'alkyle et leurs mélanges, le groupe alkyle pouvant être linéaire, ramifié ou cyclique et contenant de 1 à 22 atomes de carbone, de préférence de 1 à 12 atomes de carbone.

Avantageusement, les monomères (méth)acryliques sont choisis parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Plus avantageusement, les monomères (méth)acryliques sont choisis de manière à ce qu'au moins 50% massique des monomères (méth)acryliques soit constitué de méthacrylate de méthyle, et plus avantageusement que 60% massique des monomères (méth)acryliques soit constitué de méthacrylate de méthyle.

### • Le tensioactif

La première dispersion comprend en outre un ou plusieurs tensioactifs. Il peut s'agir notamment d'un ou plusieurs tensioactifs ioniques ou non ioniques. Il peut s'agir plus particulièrement d'un ou plusieurs tensioactifs anioniques, cationiques, zwitterioniques, ou non ioniques, ou un de leurs mélanges.

Les tensioactifs anioniques sont sélectionnés parmi les sulfates, éthers sulfates, sulfonates ou phosphates d'alcools gras alcoxylés. De même, les tensioactifs non ioniques sont sélectionnés parmi les alcools gras éthoxylés, les dérivés d'alkyle phénol éthoxylés, les copolymères d'oxyde d'éthylène et d'oxyde de propylène. Les tensioactifs peuvent également être une combinaison d'au moins un tensioactif anionique et d'au moins un tensioactif non ionique tels que décrits précédemment.

Le pourcentage massique de tensioactif par rapport au poids total de mélange de monomères est de préférence compris entre 0.5% en poids et 5% en poids et plus préférentiellement compris entre 0.5% en poids et 3% en poids.

### • L'amorceur radicalaire

Les amorceurs de polymérisation sont des amorceurs de polymérisation radicalaires de préférence hydrosolubles ou des amorceurs de polymérisation radicalaires liposolubles ou partiellement liposolubles.

Les amorceurs de polymérisation radicalaires hydrosolubles sont notamment les persulfates de sodium, de potassium ou d'ammonium, utilisés seuls ou en présence d'agents réducteurs tels que les métabisulfites ou hydrosulfites de sodium, le thiosulfate de sodium, le formaldéhyde sulfoxylate de sodium, un mélange de sel disodique de 2-hydroxy-2-sulfinoacide acétique, de sulfite de sodium et de sel disodique de 2-hydroxy-2-sulfoacide acétique ou encore un mélange de sel disodique de l'hydroxysulfino d'acide acétique et de sel disodique de l'hydroxysulfo d'acide acétique .

Les amorceurs de polymérisation radicalaires liposolubles ou partiellement liposolubles sont notamment des peroxydes ou hydroperoxydes et des dérivés de l'azobisisobutyronitrile. Les peroxydes ou hydroperoxydes sont utilisés en combinaison avec les agents réducteurs décrits précédemment de façon à baisser leur température d'activation.

Le pourcentage massique d'amorceur par rapport au poids total de mélange de monomères est de préférence compris entre 0.05% en poids et 3% en poids, de préférence entre 0.1% en poids et 2% en poids.

### La deuxième dispersion

Cette deuxième dispersion est avantageusement une dispersion aqueuse.

### • Substance ignifugeante

La substance ignifugeante est de préférence choisie parmi :
- Des additifs dérivés phosphorés tels que des phosphinates, des diphosphinates, des phosphonates, des phosphates, du phosphore rouge, des polyphosphates d'ammonium, ou leurs mélanges,
- Des charges minérales hydratées telles que des hydroxydes métalliques.

**S'agissant des additifs dérivés phosphorés,** ils sont plus particulièrement choisit parmi les phosphinates ou diphosphinates présentant les formules (I) ou (II) suivantes : 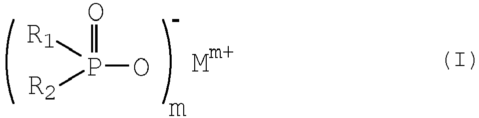 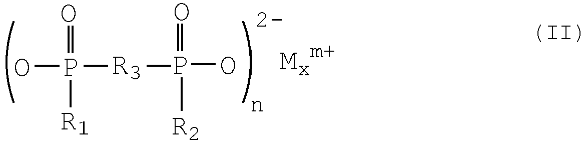 dans lesquelles :
- R₁ et R₂ désignent des groupements alkyle en C₁-C₆, linéaires ou ramifiés et/ou aryle ;
- R₃ désigne un groupement alkylène en C₁-C₁₀, linéaire ou ramifié, arylène en C₆-C₁₀, alkylarylène ou arylalkylène ;
- M désigne Mg, Ca, Al, Sb, Sn, Ge, Ti, Zn, Fe, Zr, Ce, Bi, Sr, Mn, Li, Na, K ;
- m est le nombre de charges positives et est un nombre entier entre 1 et 4 ;
- n est un nombre entier entre 1 et 4 ;
- x est un nombre entier entre 1 et 4.

On peut aussi combiner deux ou plusieurs additifs dérivés phosphorés de formule (I) et/ou (II). Avantageusement, M désigne Ca, Al ou Zn. De préférence, M désigne Al.

R₁ et R₂ sont de préférence des groupements alkyle comme par exemple des groupements méthyle, éthyle, n-propyle, isopropyle, n-butyle, tert-butyle, n-pentyle et/ou phényle.

R₃ est de préférence le groupement méthylène, éthylène, n-propylène, isopropylène, n-butylène, tert-butylène, n-pentylène, n-octylène ou n-docécylène. Il peut s'agir aussi du groupement phénylène, méthylphénylène, éthylphénylène, tert-butylphénylène, méthylnaphtylène, phényléthylène, phényléthylène, phénylpropylène ou naphtalène.

De préférence, on utilise un dérivé phosphoré de formule (I) dans lequel M désigne Al et R₁ et R₂ désignent tous deux un groupement alkyle en C₁-C₆. De préférence, R₁ et R₂ sont tous deux des groupements éthyle ou bien un groupement éthyle et un groupement méthyle c'est-à-dire que l' additif dérivé phosphoré correspond à un produit de formule (III) ou (IV) :

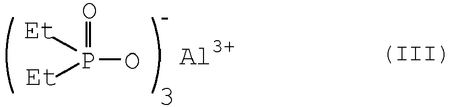

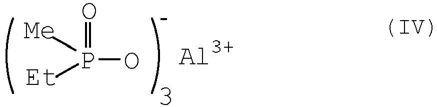

Pour obtenir une répartition homogène du mélange (méth)acrylique dans les fibres du substrat fibreux au moment de l'imprégnation, l'additif dérivé phosphoré se présente sous forme de particules dont le diamètre moyen D₅₀ est compris entre 0,5 et 10 µm, avantageusement entre 1 et 5 µm. Ce diamètre moyen D₅₀ des particules est mesuré par granulométrie à diffraction laser, au moyen d'un instrument de la gamme Microtrac (marque déposée). Pour l'estimation du diamètre moyen des particules, on mesure le diamètre moyen en volume D₅₀ ou D(v ;0,5), qui correspond à la taille de la particule pour laquelle 50% de l'échantillon a une taille inférieure à cette taille et 50% de l'échantillon a une taille supérieure à cette taille. Cette taille est également appelée diamètre moyen en volume, lequel est relié au diamètre médian en masse par la masse volumique des particules, en supposant une masse volumique indépendante de la taille des particules.

**S'agissant des charges minérales hydratées,** ce sont essentiellement des hydroxydes métalliques, qui se présentent plus particulièrement sous forme de trihydate d'alumine (Al(OH)₃) ou d'hydroxyde de magnésium (Mg(OH)). De préférence, il s'agit du trihydrate d'alumine (Al(OH)₃).

Les hydroxydes métalliques subissent une déshydratation endothermique lors de leur dégradation thermique. La libération d'eau refroidit le matériau composite et dilue les gaz dans la zone des flammes, provoquant ainsi un retard à l'inflammation. De plus, à l'issue de leur dégradation thermique, il se forme dans le matériau composite, une couche d'oxyde métallique Al₂O ou MgO qui joue un rôle de bouclier thermique.

De préférence, pour obtenir une bonne dispersion dans la dispersion (méth)acrylique, et une répartition homogène dans les fibres du substrat fibreux au moment de l'imprégnation, l'hydroxyde métallique ignifugeant se présente sous forme de particules dont le diamètre moyen D₅₀ est compris entre 0,5 et 10 µm, avantageusement entre 1 et 5 µm.

De préférence, afin que la viscosité de la deuxième dispersion puis la viscosité du mélange (méth)acrylique soient suffisamment basse pour permettre une imprégnation optimale du substrat fibreux, le pourcentage massique de la substance ignifugeante dans la deuxième dispersion est compris entre 30 et 70%, de préférence entre 40% en poids et 60% en poids par rapport au poids total de la deuxième dispersion.

### • L'agent dispersant

Afin d'obtenir une dispersion stable de substance ignifugeante dans l'eau, ladite substance ignifugeante est associée à un agent dispersant. Tout agent dispersant permettant d'obtenir une dispersion stable de substance ignifugeante telle que décrite dans l'eau peut être utilisé.

De préférence, le pourcentage massique de l'agent dispersant dans la deuxième dispersion est compris entre 0.01% et 5%, de préférence entre 0.01% et 1%, et de manière davantage préférée entre 0.01% et 0.5%.

Un agent dispersant est un adjuvant qui a la propriété de maintenir en dispersion des particules.

L'agent dispersant est soit un polymère soit un tensioactif. L'agent dispersant améliore la séparation des particules dans la dispersion. L'agent dispersant prévient la floculation ou agglomération de ces particules, c'est-à-dire leur regroupement en plus grosses particules, qui pourraient alors facilement sédimenter et conduire à une séparation des phases et/ou précipitation des particules.

### Le substrat fibreux

En ce qui concerne le substrat fibreux, on peut mentionner les tissus, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres linéaires. Les fibres peuvent être discontinues ou continues. Les fibres peuvent être agencées de manière aléatoire ou sous la forme d'un filament continu en parallèle les unes aux autres. Une fibre est définie par son rapport de longueur, qui est le rapport entre la longueur et le diamètre de la fibre. Les fibres utilisées dans la présente invention sont des fibres longues ou des fibres continues. Les fibres ont un rapport de longueur d'au moins 1 000, de préférence d'au moins 1 500, de manière davantage préférée d'au moins 2 000, avantageusement d'au moins 3 000 et le plus avantageusement d'au moins 5 000.

La forme bidimensionnelle correspond à des mats fibreux ou des renforts non tissés ou des stratifils tissés ou des faisceaux de fibres, qui peuvent également être tressés.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges. De préférence, le substrat fibreux est choisi parmi les fibres minérales. De manière davantage préférée, le substrat fibreux est choisi parmi les fibres de verre.

### Le procédé d'imprégnation d'un substrat fibreux

Le procédé d'imprégnation du substrat fibreux comprend une étape d'imprégnation dudit substrat fibreux avec le mélange (méth)acrylique décrit précédemment, ce mélange comprend:
a) la première dispersion comprenant au moins un polymère (méth)acrylique obtenu par polymérisation en émulsion d'un ou plusieurs monomères (méth)acryliques,
b) la deuxième dispersion comprenant au moins une substance ignifugeante.

Le procédé d'imprégnation comprend, préalablement à l'étape d'imprégnation du substrat fibreux, une étape de fabrication du mélange (méth)acrylique. Cette étape comprend la préparation de la première dispersion et de la deuxième dispersion. La première dispersion comprend initialement un ou plusieurs monomères (méth)acryliques destinés à polymériser en émulsion afin de former un polymère (méth)acrylique.

L'étape de fabrication du mélange (méth)acrylique comprend en outre le mélange de la première dispersion et la deuxième dispersion afin de fabriquer la mélange (méth)acrylique. Le mélange (méth)acrylique étant obtenu à partir de deux dispersions stabilisées, il est lui-même stabilisé.

Ainsi, le mélange (méth)acrylique obtenu comprend au moins un polymère (méth)acrylique et au moins une substance ignifugeante, ledit polymère (méth)acrylique et ladite substance ignifugeante étant tels que définis précédemment.

L'étape d'imprégnation du substrat fibreux par le mélange (méth)acrylique est réalisée de préférence par trempage ou immersion du substrat fibreux dans le mélange (méth)acrylique, ou encore pulvérisation du mélange (méth)acrylique sur le substrat fibreux. L'imprégnation peut être réalisée avec ou sans ajout de pression.

### Le procédé de fabrication de pièces en matériau composite

Le procédé de fabrication de pièces mécaniques ou d'éléments structurés ou d'articles, comprend :
a) l'imprégnation du substrat fibreux avec un mélange (méth)acrylique obtenu par mélange de la première dispersion comprenant au moins un polymère (méth)acrylique obtenu par polymérisation en émulsion d'un ou plusieurs monomères (méth)acryliques, et de la deuxième dispersion comprenant au moins une substance ignifugeante,
b) le séchage du substrat fibreux imprégné par le mélange (méth)acrylique,
c) la consolidation du substrat fibreux imprégné par le mélange (méth)acrylique obtenu après l'étape de séchage.

L'étape de séchage du substrat fibreux imprégné par le mélange (méth)acrylique est réalisée par élévation de la température. La température de séchage est de préférence comprise entre 20°C et 200°C, de préférence entre 50°C et 180°C, et de manière davantage préférée entre 80°C et 150°C.

L'étape de séchage permet d'évaporer l'eau et d'obtenir un substrat fibreux imprégné avec une couche extérieure dans laquelle les particules de polymère ont fusionné et forment une matrice polymère entourant chaque fibre dudit substrat fibreux. La porosité et les défauts des pièces en matériau composite ultérieurement fabriquées sont ainsi diminués, et les propriétés mécaniques desdites pièces en matériau composite sont améliorées.

De manière avantageuse, l'étape de séchage est réalisée dans une étuve. Il est également possible d'utiliser un four ou des rouleaux chauffants, ou tout autre dispositif prévu à cet effet.

Lors de l'étape de consolidation, le substrat fibreux imprégné obtenu après séchage est compressé sous haute température afin d'augmenter la cohésion de la matrice polymère. On obtient ainsi une pièce en matériau composite possédant de bonnes propriétés mécaniques et ignifuges, grâce à la matrice polymère consolidée entourant chaque fibre du substrat fibreux.

Lors de l'étape de consolidation, la température est de préférence comprise entre 100°C et 350°C, de préférence entre 150°C et 300°C, et de manière davantage préférée entre 180°C et 250°C. Une telle température peut être constante ou variable pendant toute ou partie de l'étape de consolidation. De préférence, la température est constante pendant l'étape de consolidation.

L'étape de consolidation permet d'obtenir une pièce en matériau composite de la forme souhaitée par l'utilisateur. La pièce est de préférence obtenue par consolidation de plusieurs plis de substrat fibreux imprégné obtenus après séchage, de manière à les lier entre eux. Les plis sont assemblés dans un moule permettant de donner la forme à la pièce finale. La forme obtenue dépend également du nombre de plis utilisés et de la disposition des plis les uns par rapport aux autres lors de la consolidation.

Les plis sont positionnés dans un moule puis chauffés à haute température, ladite température étant supérieure à la température de transition vitreuse du polymère (méth)acrylique, et de préférence supérieure à la température de séchage. Un tel chauffage permet de former des enchevêtrements de chaînes macromoléculaires du polymère (méth)acrylique, ce qui aboutit à une plus grande cohésion de la matrice polymère.

La consolidation du substrat fibreux imprégné après séchage est avantageusement réalisée sous pression, ladite pression étant appliqué pendant toute ou partie de l'étape de consolidation.

De préférence, la pression appliquée lors de l'étape de consolidation est comprise entre 1 bar et 150 bars, de préférence entre 3 bars et 100 bars, et de manière davantage préférée entre 5 bars et 50 bars. Avantageusement, la pression appliquée augmente au cours de l'étape de de consolidation. De manière davantage préférée, la pression appliquée augmente au cours de l'étape de consolidation entre 1 bar et 150 bars, de préférence entre 3 bars et 100 bars, et de manière davantage préférée entre 5 bars et 50 bars.

De préférence, le temps de consolidation est compris entre 1 minute et 20 minutes, de préférence entre 3 minutes et 10 minutes.

L'étape de consolidation est de préférence réalisée à l'aide d'une presse hydraulique, en particulier une presse hydraulique à plateaux chauffants entre lesquels est disposé un moule contenant des plis de substrat fibreux imprégné de matrice polymère selon l'invention. Après chauffage et mise sous pression, suivi d'un refroidissement, le matériau composite est obtenu par démoulage.

Postérieurement à l'étape de consolidation, il est possible de réaliser une deuxième imprégnation du substrat fibreux avec une résine polymère. Une telle résine peut être thermodurcissable ou thermoplastique. Parmi les résines thermodurcissables, on peut notamment citer les résines polyester, les résines vinyl-ester, ou les résines époxydes. Parmi les résines thermoplastiques, on peut notamment citer les résines méthacryliques, les résines polyamides, et les résines acryliques.

Les pièces mécaniques ou les éléments structurés ou les articles en matériau composite peuvent être obtenus selon différents procédés postérieurement à l'étape de consolidation. On peut mentionner l'infusion, le moulage en sac sous vide, le moulage en sac sous pression, le moulage en autoclave, le moulage par transfert de résine (RTM), le moulage par injection-réaction (RIM), le moulage par injection-réaction renforcé (R-RIM) et ses variantes, le moulage sous presse ou le moulage par compression.

Les procédés de fabrication préférés pour la fabrication de pièces mécaniques ou éléments structurés ou articles à base de matériau composite sont des procédés selon lesquels le mélange (méth)acrylique est transféré au substrat fibreux par imprégnation dudit substrat fibreux dans un moule, de manière davantage préférée dans un moule fermé.

De préférence, le procédé de fabrication selon l'invention est mis en œuvre par moulage par compression, moulage par transfert de résine (RTM), en autoclave, ou par infusion.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du mélange (méth)acrylique. Le moulage par transfert de résine comprend de nombreuses variations qui diffèrent au niveau de la mécanique d'introduction du mélange (méth)acrylique au niveau du substrat fibreux dans la cavité de moulage. Ces variations vont de l' infusion sous vide au moulage par transfert de résine sous vide (VARTM). Ce procédé peut être réalisé à température ambiante ou élevée.

Un sirop ou une dispersion (méth)acrylique est particulièrement bien adapté au procédé d'infusion, de par sa très faible viscosité. Selon ce procédé, tel que décrit par exemple dans la demande de brevet WO13056845, le sirop (méth)acrylique est aspiré dans le substrat fibreux présent dans un moule spécial par application d'un léger vide. Le substrat fibreux est infusé et complètement imprégné par le mélange (méth)acrylique. Un avantage de ce procédé est la grande quantité de matériau fibreux dans le matériau composite final obtenu.

L'invention concerne également une pièce mécanique ou un élément structuré ou un article en matériau composite obtenu par mise en œuvre du procédé de fabrication selon l'invention.

Une telle pièce est notamment une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

### Exemples de mise en œuvre des procédés d'imprégnation d'un substrat fibreux et de fabrication de pièces en matériau composite selon l'invention

### • Exemple 1 : Imprégnation d'un substrat fibreux de toile de verre par une dispersion comprenant une substance ignifugeante.

Préparation de la dispersion de charges ignifugeantes : On met dans un récipient ouvert à l'air et de grande taille 1 kg d'eau distillée, puis on ajoute 1 g de Rheoperse ^{®} 3310, un stabilisant fabriqué et commercialisé notamment par la société Arkema. Le mélange est mis sous agitation, puis 1 kg de charges ATH MOLDX P18, un Trihydrate d'Alumine fabriqué et commercialisé notamment par la société HUBER, est ajouté doucement. Le mélange est ensuite agité pendant 10 minutes.

Imprégnation du substrat fibreux : Le substrat fibreux est un tissu taffetas en fibres de verre 600T de la société Chomarat, de masse surfacique 600 g/m². On imprègne manuellement le substrat fibreux en le plongeant dans un bain de la dispersion précédemment préparée, sans essorage. Le substrat fibreux imprégné obtenu est séché à 80°C pendant 10 minutes dans une étuve, puis pesé après séchage. La pesée indique un pourcentage massique d'ATH de 20% en poids par rapport au poids total de substrat fibreux imprégné.

Cependant, il est constaté que le substrat imprégné obtenu est peu manipulable, et les charges ATH n'adhèrent que très peu audit substrat fibreux imprégné.

### • Exemple 2 : Imprégnation d'un substrat fibreux de toile de verre par un mélange (méth)acrylique à caractère ignifuge et fabrication d'une pièce en matériau composite

Préparation du mélange (méth)acrylique : on mélange la dispersion de charges ignifugeantes préparée dans l'Exemple 1 avec une dispersion de polyméthacrylate de méthyle (PMMA). Le polymère contenu dans la dispersion méthacrylique est un polymère de méthacrylate de méthyle de référence 30D54AE, fabriqué et commercialisé par la société Arkema, de masse molaire égale à 120 000 g/mol, et de température de transition vitreuse égale à 115.7°C.

Imprégnation du substrat fibreux et séchage du substrat fibreux imprégné : On imprègne un tissu taffetas en fibres de verre 600T, identique à celui de l'Exemple 1, par le mélange (méth)acrylique précédemment préparé, sans essorage. Le substrat fibreux imprégné obtenu est séché à 80°C pendant 10 minutes dans une étuve, puis pesé après séchage. La pesée indique un pourcentage massique de mélange (méth)acrylique de 35% en poids par rapport au poids total de substrat fibreux imprégné, soit 11.5% massique d'ATH et 23.5% massique de polymère 30D54AE par rapport à la masse totale de substrat fibreux imprégné. L'imprégnation est optimale de sorte que le substrat imprégné obtenu est aisément manipulable, et les charges ATH adhèrent parfaitement audit substrat fibreux imprégné.

Consolidation du substrat fibreux imprégné : Sur une première plaque en acier est placée une première feuille de Kapton ^{®}, un film de polyimide à haute stabilité thermique développé et commercialisé notamment par la société DuPont. Puis on vient positionner un moule sur la feuille de Kapton ^{®}, le moule étant de plus faible épaisseur que la pièce en matériau composite finale, de sorte que les plateaux chauffants appuient sur le substrat fibreux imprégné et non sur le moule afin d'assurer une bonne compression. A l'intérieur du moule sont placés quatre plis de substrat fibreux imprégné de matrice polymère. On place ensuite une deuxième feuille de Kapton ^{®} sur les plis, puis une deuxième plaque d'acier sur la deuxième feuille de Kapton ^{®}.

Le montage obtenu est installé entre les deux plateaux chauffants de la presse hydraulique, lesdits plateaux chauffants ayant une température égale à 250°C. Les plateaux chauffants sont mis au contact l'un de l'autre, sans pression, pendant 3 minutes. Puis on ajoute une pression de 20 bars pendant 3 minutes. Les plateaux sont ensuite refroidis grâce à une vanne d'eau froide, la chauffe est arrêtée et la pression est maintenue. Lorsque la température des plateaux atteint 60°C, la vanne d'eau froide est fermée et une vanne d'air est ouverte afin d'évacuer l'eau des plateaux. Le montage est extrait des plateaux chauffants et la pièce en matériau composite est démoulée.

## Revendications

1. Procédé d'imprégnation d'un substrat fibreux, **caractérisé en ce qu'**il comprend une étape d'imprégnation du substrat fibreux avec un mélange (méth)acrylique comprenant
a)une première dispersion comprenant au moins un polymère (méth)acrylique obtenu par polymérisation en émulsion d'un ou plusieurs monomères (méth)acryliques,
b)une deuxième dispersion comprenant au moins une substance ignifugeante, la substance ignifugeante se présente sous forme de particules dont le diamètre moyen D₅₀ est compris entre 0,5 et 10 µm
ledit mélange (méth)acrylique est obtenue par une étape de fabrication par mélange de la première dispersion comprenant au moins un polymère (méth)acrylique obtenu par polymérisation en émulsion d'un ou plusieurs monomères (méth)acryliques, et de la deuxième dispersion comprenant au moins une substance ignifugeante.

2. Procédé d'imprégnation selon la revendication 1, **caractérisé en ce que** le polymère (méth)acrylique de la première dispersion est choisi parmi les polyméthacrylates d'alkyle ou les polyacrylates d'alkyle.

3. Procédé d'imprégnation selon la revendication 1 ou 2, **caractérisé en ce que** les monomères (méth)acryliques de la première dispersion sont choisis parmi l'acide acrylique, l'acide méthacrylique, les monomères acryliques d'alkyle, les monomères méthacryliques d'alkyle et leurs mélanges.

4. Procédé d'imprégnation selon la revendication 1, **caractérisé en ce que** les monomères (méth)acryliques de la première dispersion sont choisis parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

5. Procédé d'imprégnation selon la revendication 1, **caractérisé en ce que** la substance ignifugeante de la deuxième dispersion est choisie parmi :
• des additifs dérivés phosphorés tels que des phosphinates, des diphosphinates, des phosphonates, des phosphates, du phosphore rouge, des polyphosphates d'ammonium, ou leurs mélanges,
• des charges minérales hydratées telles que des hydroxydes métalliques.

6. Procédé d'imprégnation selon la revendication 5, **caractérisé en ce que** les additifs dérivés phosphorés sont choisis parmi les phosphinates ou diphosphinates présentant les formules (I) ou (II) suivantes : 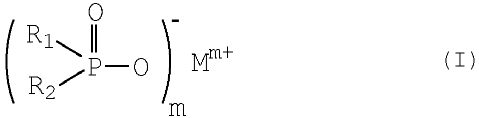 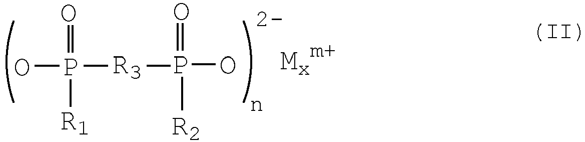 dans lesquelles :
• R₁ et R₂ désignent des groupements alkyle en C₁-C₆, linéaires ou ramifiés et/ou aryle ;
• R₃ désigne un groupement alkylène en Ci-Cio, linéaire ou ramifié, arylène en C₆-C₁₀, alkylarylène ou arylalkylène ;
• M désigne Mg, Ca, Al, Sb, Sn, Ge, Ti, Zn, Fe, Zr, Ce, Bi, Sr, Mn, Li, Na, K ;
• m est le nombre de charges positives et est un nombre entier entre 1 et 4 ;
• n est un nombre entier entre 1 et 4 ;
• x est un nombre entier entre 1 et 4.

7. Procédé d'imprégnation selon la revendication 5, **caractérisé en ce que** les additifs dérivés phosphorés ont l'une des formules (III) ou (IV) suivantes :

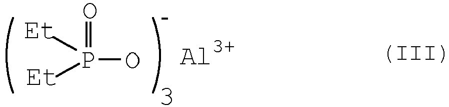

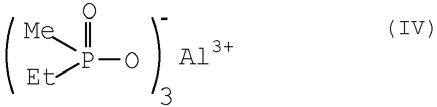

8. Procédé d'imprégnation selon les revendication 1 à 7, **caractérisé en ce que** dans la deuxième dispersion la substance ignifugeante qui se présente sous forme de particules dont le diamètre moyen D₅₀ est compris entre 1 et 5 µm.

9. Procédé d'imprégnation selon la revendication 1, **caractérisé en ce que** dans la deuxième dispersion ladite substance ignifugeante est associée à un agent dispersant.

10. Procédé d'imprégnation selon la revendication 9, **caractérisé en ce que** le pourcentage massique de l'agent dispersant dans la deuxième dispersion est compris entre 0.01% et 5%.

11. Procédé d'imprégnation selon la revendications 1 à 10, **caractérisé en ce que** l'étape d'imprégnation dudit substrat fibreux est réalisée dans un bain d'imprégnation.

12. Procédé de fabrication de pièces mécaniques ou d'éléments structurés ou d'articles, **caractérisé en ce qu'**il comprend les étapes suivantes :
a) imprégnation d'un substrat fibreux, conformément au procédé selon les revendications 1 à 11, avec ledit mélange (méth)acrylique,
b)séchage du substrat fibreux imprégné par le mélange (méth)acrylique,
c) consolidation du substrat fibreux imprégné obtenu après l'étape de séchage.

13. Procédé de fabrication selon la revendication 12, **caractérisé en ce que** l'étape de séchage est réalisée à une température comprise entre 20°C et 200°C, de préférence entre 50°C et 180°C, et de manière davantage préférée entre 80°C et 150°C.

14. Procédé de fabrication selon la revendication 12, **caractérisé en ce que** l'étape de consolidation est réalisée à une température comprise entre 100°C et 350°C, de préférence entre 150°C et 300°C, et de manière davantage préférée entre 180°C et 250°C, la température pouvant être constante ou variable pendant toute ou partie de l'étape de consolidation.

15. Procédé de fabrication selon la revendication 12, **caractérisé en ce qu'**après l'étape de séchage, le substrat fibreux imprégné comprend entre 5% en poids et 30% en poids, de préférence entre 5% et 20% en poids, et de manière davantage préférée entre 5% et 15% en poids de matrice polymère par rapport au poids total de substrat fibreux imprégné.

16. Procédé de fabrication selon la revendication 12, **caractérisé en ce qu'**après l'étape de séchage, le substrat fibreux imprégné comprend entre 5% en poids et 30% en poids, de préférence entre 15% en poids et 25% en poids de substance ignifugeante par rapport au poids total de substrat fibreux imprégné.

## Patentansprüche

1. Verfahren zum Imprägnieren eines Fasersubstrats, **dadurch gekennzeichnet, dass** es einen Schritt des Imprägnierens des Fasersubstrats mit einer (Meth)-acrylmischung umfasst, welche
a) eine erste Dispersion, die mindestens ein durch Emulsionspolymerisation eines oder mehrerer (Meth)acryl-Monomere erhaltenes (Meth)acrylPolymer umfasst,
b) eine zweite Dispersion, die mindestens eine Flammschutzsubstanz umfasst, wobei die Flammschutzsubstanz in Form von Teilchen mit einem mittleren Durchmesser D₅₀ zwischen 0,5 und 10 µm vorliegt,
umfasst, wobei die (Meth)acrylmischung durch einen Schritt des Herstellens durch Mischen der ersten Dispersion, die mindestens ein durch Emulsionspolymerisation eines oder mehrerer (Meth)acryl-Monomere erhaltenes (Meth)acryl-Polymer umfasst, und der zweiten Dispersion, die mindestens eine Flammschutzsubstanz umfasst, erhalten wird.

2. Imprägnierungsverfahren nach Anspruch 1, **dadurch gekennzeichnet, dass** das (Meth)acryl-Polymer der ersten Dispersion aus Polyalkylmethacrylaten oder Polyalkylacrylaten ausgewählt ist.

3. Imprägnierungsverfahren nach Anspruch 1 oder 2, **dadurch gekennzeichnet, dass** die (Meth)acryl-Monomere der ersten Dispersion aus Acrylsäure, Methacrylsäure, Alkylacryl-Monomeren, Alkylmethacryl-Monomeren und Mischungen davon ausgewählt sind.

4. Imprägnierungsverfahren nach Anspruch 1, **dadurch gekennzeichnet, dass** die (Meth)acryl-Monomere der ersten Dispersion aus Methylmethacrylat, Ethylmethacrylat, Methylacrylat, Ethylacrylat, Methacrylsäure, Acrylsäure, n-Butylacrylat, Isobutylacrylat, n-Butylmethacrylat, Isobutylmethacrylat, Cyclohexylacrylat, Cyclohexylmethacrylat, Isobornylacrylat, Isobornylmethacrylat und Mischungen davon ausgewählt sind.

5. Imprägnierungsverfahren nach Anspruch 1, **dadurch gekennzeichnet, dass** die Flammschutzsubstanz der zweiten Dispersion aus
• Phosphorderivat-Additiven wie Phosphinaten, Diphosphinaten, Phosphonaten, Phosphaten, rotem Phosphor, Ammoniumpolyphosphaten oder Mischungen davon,
• hydratisierten Mineralfüllstoffen wie Metallhydroxiden
ausgewählt ist.

6. Imprägnierungsverfahren nach Anspruch 5, **dadurch gekennzeichnet, dass** die Phosphorderivat-Additive aus Phosphinaten oder Diphosphinaten der folgenden Formeln (I) oder (II) ausgewählt sind: 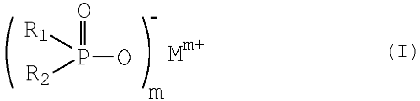 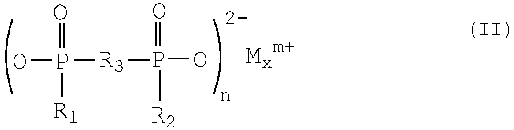 in denen:
• R₁ und R₂ für eine lineare oder verzweigte C₁-C₆-Alkyl- und/oder Arylgruppe stehen;
• R₃ für eine lineare oder verzweigte C₁-C₁₀-Alkylen-, C₆-C₁₀-Arylen-, Alkylarylen- oder Arylalkylengruppe steht;
• M für Mg, Ca, Al, Sb, Sn, Ge, Ti, Zn, Fe, Zr, Ce, Bi, Sr, Mn, Li, Na oder K steht;
• m für die Zahl positiver Ladungen steht und für eine ganze Zahl zwischen 1 und 4 steht;
• n für eine ganze Zahl zwischen 1 und 4 steht;
• x für eine ganze Zahl zwischen 1 und 4 steht.

7. Imprägnierungsverfahren nach Anspruch 5, **dadurch gekennzeichnet, dass** die Phosphorderivat-Additive eine der folgenden Formeln (III) oder (IV) aufweisen:

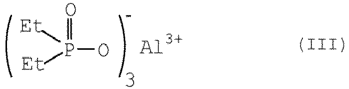

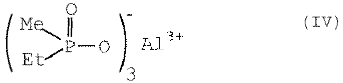

8. Imprägnierungsverfahren nach den Ansprüchen 1 bis 7, **dadurch gekennzeichnet, dass** in der zweiten Dispersion die Flammschutzsubstanz in Form von Teilchen mit einem mittleren Durchmesser D₅₀ zwischen 1 und 5 µm vorliegt.

9. Imprägnierungsverfahren nach Anspruch 1, **dadurch gekennzeichnet, dass** in der zweiten Dispersion die Flammschutzsubstanz mit einem Dispergiermittel kombiniert ist.

10. Imprägnierungsverfahren nach Anspruch 9, **dadurch gekennzeichnet, dass** der Massenprozentanteil des Dispergiermittels in der zweiten Dispersion zwischen 0,01 % und 5 % liegt.

11. Imprägnierungsverfahren nach den Ansprüchen 1 bis 10, **dadurch gekennzeichnet, dass** der Schritt des Imprägnierens des Fasersubstrats in einem Imprägnierungsbad durchgeführt wird.

12. Verfahren zur Herstellung von mechanischen Teilen oder Bauelementen oder Gegenständen, **dadurch gekennzeichnet, dass** es die folgenden Schritte umfasst:
a) Imprägnieren eines Fasersubstrats mit der (Meth)acrylmischung gemäß dem Verfahren nach den Ansprüchen 1 bis 11,
b) Trocknen des mit der (Meth)acrylmischung imprägnierten Fasersubstrats,
c) Verfestigen des nach dem Trocknungsschritt erhaltenen imprägnierten Fasersubstrats.

13. Herstellungsverfahren nach Anspruch 12, **dadurch gekennzeichnet, dass** der Trocknungsschritt bei einer Temperatur zwischen 20 °C und 200 °C, vorzugsweise zwischen 50 °C und 180 °C und weiter bevorzugt zwischen 80 °C und 150 °C durchgeführt wird.

14. Herstellungsverfahren nach Anspruch 12, **dadurch gekennzeichnet, dass** der Verfestigungsschritt bei einer Temperatur zwischen 100 °C und 350 °C, vorzugsweise zwischen 150 °C und 300 °C und weiter bevorzugt zwischen 180 °C und 250 °C durchgeführt wird, wobei die Temperatur während des gesamten Verfestigungsschritts oder eines Teils davon konstant oder variabel sein kann.

15. Herstellungsverfahren nach Anspruch 12, **dadurch gekennzeichnet, dass** das imprägnierte Fasersubstrat nach dem Trocknungsschritt zwischen 5 Gew.-% und 30 Gew.-%, vorzugsweise zwischen 5 und 20 Gew.-% und weiter bevorzugt zwischen 5 und 15 Gew.-% Polymermatrix, bezogen auf das Gesamtgewicht des imprägnierten Fasersubstrats, umfasst.

16. Herstellungsverfahren nach Anspruch 12, **dadurch gekennzeichnet, dass** das imprägnierte Fasersubstrat nach dem Trocknungsschritt zwischen 5 Gew.-% und 30 Gew.-%, vorzugsweise zwischen 15 Gew.-% und 25 Gew.%, Flammschutzsubstanz, bezogen auf das Gesamtgewicht des imprägnierten Fasersubstrats, umfasst.

## Claims

1. Method for impregnating a fibrous substrate, **characterized in that** it comprises a step of impregnating the fibrous substrate with a (meth)acrylic mixture comprising
a) a first dispersion comprising at least one (meth)acrylic polymer obtained by emulsion polymerization of one or more (meth)acrylic monomers,
b) a second dispersion comprising at least one flame retardant, the flame retardant being in the form of particles having an average diameter D₅₀ of between 0.5 and 10 µm,
said (meth)acrylic mixture being obtained by a step of preparing by mixing the first dispersion, comprising at least one (meth)acrylic polymer obtained by emulsion polymerization of one or more (meth)acrylic monomers, and the second dispersion, comprising at least one flame retardant.

2. Impregnating method according to Claim 1, **characterized in that** the (meth)acrylic polymer of the first dispersion is selected from polyalkyl methacrylates or polyalkyl acrylates.

3. Impregnating method according to Claim 1 or 2, **characterized in that** the (meth)acrylic monomers of the first dispersion are selected from acrylic acid, methacrylic acid, alkyl acrylic monomers, alkyl methacrylic monomers and mixtures thereof.

4. Impregnating method according to Claim 1, **characterized in that** the (meth)acrylic monomers of the first dispersion are selected from methyl methacrylate, ethyl methacrylate, methyl acrylate, ethyl acrylate, methacrylic acid, acrylic acid, n-butyl acrylate, isobutyl acrylate, n-butyl methacrylate, isobutyl methacrylate, cyclohexyl acrylate, cyclohexyl methacrylate, isobornyl acrylate, isobornyl methacrylate and mixtures thereof.

5. Impregnating method according to Claim 1, **characterized in that** the flame retardant of the second dispersion is selected from:
• phosphorus derivative additives such as phosphinates, diphosphinates, phosphonates, phosphates, red phosphorus, ammonium polyphosphates, or mixtures thereof,
• hydrated inorganic fillers such as metal hydroxides.

6. Impregnating method according to Claim 5, **characterized in that** the phosphorus derivative additives are selected from phosphinates or diphosphinates having the formulas (I) or (II) below: 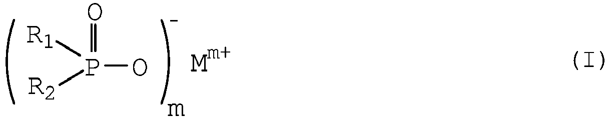 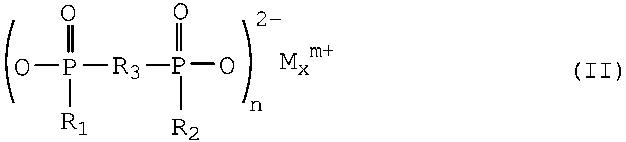 in which:
• R₁ and R₂ denote linear or branched C₁-C₆ alkyl groups, and/or aryl groups;
• R₃ denotes a linear or branched C₁-C₁₀ alkylene group, C₆-C₁₀ arylene group, or alkylarylene or arylalkylene group;
• M denotes Mg, Ca, Al, Sb, Sn, Ge, Ti, Zn, Fe, Zr, Ce, Bi, Sr, Mn, Li, Na, K;
• m is the number of positive charges and is an integer between 1 and 4;
• n is an integer between 1 and 4;
• x is an integer between 1 and 4.

7. Impregnating method according to Claim 5, **characterized in that** the phosphorus derivative additives have one of the formulas (III) or (IV) below:

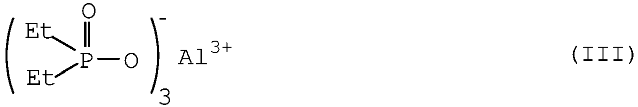

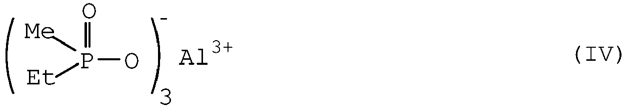

8. Impregnating method according to Claims 1 to 7, **characterized in that**, in the second dispersion, the flame retardant is in the form of particles having an average diameter D₅₀ of between 1 and 5 µm.

9. Impregnating method according to Claim 1, **characterized in that**, in the second dispersion, said flame retardant is combined with a dispersant.

10. Impregnating method according to Claim 9, **characterized in that** the mass percentage of the dispersant in the second dispersion is between 0.01% and 5%.

11. Impregnating method according to Claims 1 to 10, **characterized in that** the step of impregnating said fibrous substrate is carried out in an impregnating bath.

12. Method for manufacturing mechanical parts or structured elements, or articles, **characterized in that** it comprises the following steps:
a) impregnating a fibrous substrate, in accordance with the method according to Claims 1 to 11, with said (meth)acrylic mixture,
b) drying the fibrous substrate impregnated with the (meth)acrylic mixture,
c) consolidating the impregnated fibrous substrate obtained after the drying step.

13. Manufacturing method according to Claim 12, **characterized in that** the drying step is carried out at a temperature of between 20°C and 200°C, preferably between 50°C and 180°C, and more preferably between 80°C and 150°C.

14. Manufacturing method according to Claim 12, **characterized in that** the consolidating step is carried out at a temperature of between 100°C and 350°C, preferably between 150°C and 300°C, and more preferably between 180°C and 250°C, it being possible for the temperature to be constant or variable during all or part of the consolidating step.

15. Manufacturing method according to Claim 12, **characterized in that**, after the drying step, the impregnated fibrous substrate comprises between 5% by weight and 30% by weight, preferably between 5% and 20% by weight, and more preferably between 5% and 15% by weight, of polymer matrix relative to the total weight of impregnated fibrous substrate.

16. Manufacturing method according to Claim 12, **characterized in that**, after the drying step, the impregnated fibrous substrate comprises between 5% by weight and 30% by weight, preferably between 15% by weight and 25% by weight, of flame retardant relative to the total weight of impregnated fibrous substrate.
